# EUROPEAN PATENT APPLICATION

(11) **EP 1 659 095 A1**
(43) Date of publication of application: **24.05.2006**
(21) Application number: 04747723.7
(22) Date of filing: 13.07.2004
(51) Int. Cl.: C01B 3/12, H01M 8/06

(54) **FUEL TREATMENT DEVICE AND FUEL TREATMENT METHOD**

(30) Priority: 14.07.2003 JP 2003196259
(71) Applicant: Toshiba Fuel Cell Power Systems Corporation, 1-1, Shibaura 1-chome, Minato-ku Tokyo 1058001 (JP)
(72) Inventor: MIYAHARA, Hideoc/o Toshiba Fuel Cell Power Systems, Tokyo 105-8001 (JP); ARAI, Yasuhiroc/o Toshiba Fuel Cell Power Systems, Tokyo 105-8001 (JP); TANAKA, Masatoshic7o Toshiba Fuel Cell Power Syste, Tokyo 105-8001 (JP); KUZE, Tatsuyac/o Toshiba Fuel Cell Power Systems C, Tokyo 105-8001 (JP); HARADA, Makotoc/o Toshiba Fuel Cell Power Systems, Tokyo 105-8001 (JP)
(74) Representative: Henkel, Feiler & Hänzel
(86) International application number: PCT/JP2004/010259
(87) International publication number: WO 2005/005313

(57) **Abstract**

A fuel processing system 10 is disclosed which supplies a hydrogen-rich gas to a fuel cell main unit 20. When supply of raw fuel is stopped, the fuel processing system 10 executes a purge treatment to cause steam to flow as a purge gas in a forward direction and to cause air to flow in the opposite direction. Residual gas in the device is purged by this purge treatment.

## Description

### Technical Field

The present invention relates to a fuel processing system of, particularly, a fuel cell, and relates to a fuel processing system including a function of purging residual gas.

### Background Art

Recently, development of a fuel cell or a power generation system by a fuel cell has been advancing. The fuel cell (or the system) is broadly classified into a fuel cell main unit and a fuel processing system which supplies fuel to the fuel cell main unit.

Roughly, the fuel processing system transforms raw fuel such as town gas, naphtha or propane into a hydrogen-rich reformed gas and then supplies it to the fuel cell main unit.

The fuel processing system comprises, for example, a desulfurizer, a reforming reactor, a carbon monoxide (CO) shift reactor, a carbon monoxide (CO) selective oxidation reactor and the like.

The desulfurizer is a device to mainly remove a sulfur compound from the raw fuel. The reforming reactor is a main reactor which generates the hydrogen-rich gas, that is, a reformed gas including hydrogen gas as the main component from the raw fuel from which the sulfur compound has been removed by the desulfurizer.

On the other hand, the CO shift reactor and the CO selective oxidation reactor are reactors to remove carbon monoxide (CO) contained in the reformed gas generated in the reforming reactor.

Meanwhile, it has been confirmed that if the sulfur compound is contained in the raw fuel, sulfur in the sulfur compound is adsorbed by a catalyst used in the reforming reactor, the CO shift reactor, the CO selective oxidation reactor, the fuel cell main unit or the like, and catalytic power is reduced. Such a state in which the sulfur compound is adsorbed by the catalyst or the like is sometimes called sulfur poisoning.

Furthermore, it has been confirmed that if carbon monoxide (CO) is contained in the reformed gas, the catalyst of an electrode in the fuel cell main unit will be in a CO poisoning state, and catalytic power thereof will be reduced.

Therefore, in the fuel processing system, a desulfurization treatment is conducted wherein the sulfur compound contained in the raw fuel is removed by the desulfurizer. Moreover, a treatment is conducted in which carbon monoxide (CO) is removed from the reformed gas by the CO shift reactor and the CO selective oxidation reactor.

Next, when operation of the fuel cell (or the power generation system) is stopped, the fuel processing system stops the supply of the reformed gas to the fuel cell main unit as the supply of the raw fuel is stopped.

When the operation is stopped, there exist, in the fuel processing system, inflammable residual gases such as the raw fuel which has already been supplied and the generated reformed gas.

Thus, the fuel processing system is provided with a function of discharging (purging) the residual gases from the device when the supply of the raw fuel is stopped. Specifically, a method has been proposed wherein a nitrogen gas is caused to flow through gas passages (including the respective reactors) in the device to purge the residual gases (e.g., refer to Jpn. Pat. Appln. KOKAI Publication No. 2000-277137).

Another method has been proposed wherein steam is caused to flow to purge the residual gases when the operation of the fuel cell main unit is stopped, and then air is introduced to remove condensed water of the steam (e.g., refer to Jpn. Pat. Appln. KOKAI Publication No. 2002-151124).

However, when a purge gas such as nitrogen gas, steam or air is merely is caused to flow as in the prior art methods, it is highly likely that the sulfur poisoning spreads over the gas passages in the device. Therefore, there is a problem that the power of the catalysts used in the reforming reactor and the like is reduced.

### Disclosure of Invention

It is an object of the present invention to provide a fuel processing system which ensures that residual gases are purged and which can prevent sulfur poisoning from spreading in the device.

A fuel processing system according to an aspect of the present invention comprises a reactor which introduces a raw fuel, transforms the raw fuel into a hydrogen-rich reformed gas, and supplies the hydrogen-rich reformed gas; purge gas supply means for supplying a purge gas to purge a residual gas in the reactor when supply of the raw fuel is stopped; and distribution control means for distributing the purge gas supplied from the purge gas supply means in a direction opposite to a normal flow direction of the reformed gas in a gas passage including the reactor.

### Brief Description of Drawings

FIG. 1 is a block diagram showing a configuration of a fuel processing system according to an embodiment of the present invention;
FIG. 2 is a block diagram showing a specific configuration of the fuel processing system according to the present embodiment;
FIG. 3 is a diagram to explain a purge treatment according to the present embodiment;
FIGS. 4A to 4C are diagrams showing experimental data on sulfur poisoning in the fuel processing system according to the present embodiment; and
FIG. 5 is a diagram to explain the purge treatment according to an alternative embodiment.

### Best Mode for Carrying Out the Invention

Embodiments of the present invention will hereinafter be described in reference to the drawings.

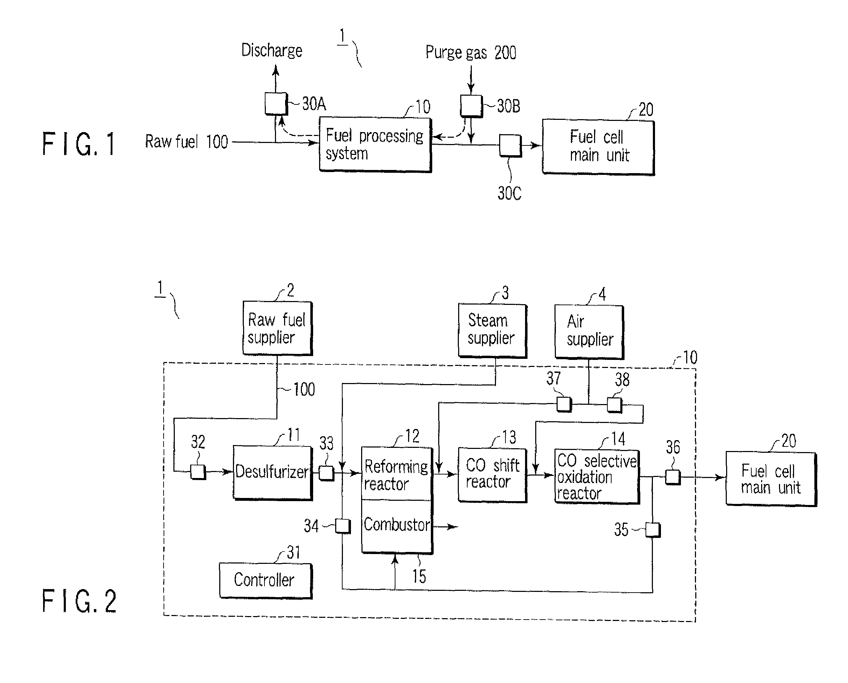

FIG. 1 is a block diagram showing a basic configuration of a fuel processing system according to the present embodiment.

The present embodiment is explained wherein a combination of steam and air is used as a purge gas which will be described later. However, as the purge gas, it is possible to apply steam alone, a combination of steam, air and an inert gas, a combination of steam and an inert gas, a combination of an inert gas and air, or a combustion exhaust gas. It is to be noted that the inert gases are, for example, a nitrogen gas, a carbon dioxide gas and a mixed gas of these.

Furthermore, in the present embodiment, a forward direction is the same direction as a direction in which a reformed gas runs, and an opposite direction is a direction opposite to the direction of the reformed gas, in a gas passage in the fuel processing system.

A fuel processing system 10 in the present embodiment supplies a hydrogen gas fuel (reformed gas) to a fuel cell main unit 20, as a component of a fuel cell power generation system 1.

The fuel processing system 10, as described later, transforms a raw fuel 100 supplied from the outside into a hydrogen-rich reformed gas and then supplies it to the fuel cell main unit 20. The raw fuel 100 is, for example, town gas, naphtha, propane, digestion gas or kerosene.

Furthermore, the fuel processing system 10 of the present embodiment has a gas distribution controller to control gas passages of the reformed gas and a purge gas 200. The gas distribution controller conceptually comprises gas passage control sections 30A, 30B to control distribution of the purge gas 200, and a passage control section 30C of the reformed gas.

The gas distribution controller controls the passage control sections 30A, 30B into a blocking state when the fuel cell power generation system 1 is in operation, that is, when the raw fuel 100 is supplied. Further, the gas distribution controller controls the passage control section 30C into an open state, and causes the reformed gas generated by the fuel processing system 10 to be supplied to the fuel cell main unit 20.

On the other hand, when the operation of the system 1 is stopped, that is, when the supply of the raw fuel 100 is stopped, the gas distribution controller controls the passage control section 30C into a blocking state, and thus stops the supply of the reformed gas to the fuel cell main unit 20.

Furthermore, the gas distribution controller controls the passage control sections 30A, 30B to introduce the purge gas 200, and distributes it through the gas passage (including various reactors as described later) within the fuel processing system 10, and then discharges the purge gas 200 to the outside of the fuel processing system 10.

In short, the gas distribution controller distributes the purge gas (air in the present embodiment) 200 in a direction opposite to the distribution direction (forward direction) of the reformed gas, thereby discharging residual gases within the fuel processing system 10.

### (Configuration of Fuel processing system)

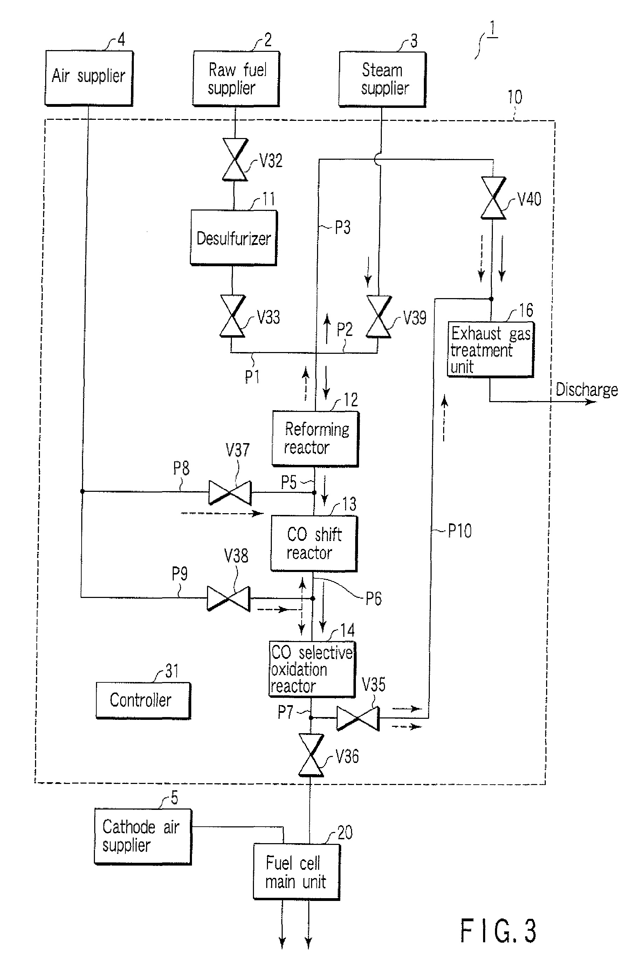

Next, a specific configuration of the fuel processing system 10 in the present embodiment will be described referring to FIGS. 2 and 3.

The fuel processing system 10 introduces the raw fuel 100 from a raw fuel supplier 2, and further introduces steam from a steam supplier 3 and air from an air supplier 4. The steam and the air are used as purge gases to purge the residual gases, as described later.

Here, the fuel cell main unit 20 has a cathode electrode and an anode electrode comprising catalytic layers containing a noble metal such as platinum. In a unit of a cell made of an electrolytic film such as a solid polymeric film sandwiched between the electrodes, the fuel cell main unit 20 is constituted of a large number of stacked cells. The fuel cell main unit 20 reacts oxygen with hydrogen to generate electricity.

The fuel cell main unit 20 is supplied with a hydrogen gas as the reformed gas from the fuel processing system 10. Further, in the fuel cell main unit 20, air is supplied to the cathode electrode from a cathode air supplier 5, as shown in FIG. 3. It is to be noted that the cathode air supplier 5 may comprise a blower or the like which supplies air at high pressure.

The raw fuel supplier 2 supplies the raw fuel 100 generally extracted from hydrocarbon such as town gas. A sulfur compound is added to this raw fuel 100 originally or artificially to assure safety.

The steam supplier 3 supplies the steam as the purge gas to the gas passage including a reforming reactor 12 and a carbon monoxide shift reactor 13.

The air supplier 4 not only supplies the air as the purge gas but also supplies air to a carbon monoxide (CO) selective oxidation reactor 14. It is to be noted that the air supplier 4 may comprise a blower or the like which supplies air at high pressure.

The fuel processing system 10 has a desulfurizer 11, the reforming reactor 12, the carbon monoxide (CO) shift reactor 13 and the carbon monoxide (CO) selective oxidation reactor 14, as shown in FIG. 2.

Furthermore, the fuel processing system 10 has a controller 31 and a gas passage controller comprising a plurality of passage control sections 32 to 38. As described later referring to FIG. 3, the passage control sections 32 to 38 are, to be specific, electrically operated valves V32, V33, V35 to V40 to control distribution of gasses. The controller 31 controls operations (open/close operations) of the passage control sections 32 to 38.

The desulfurizer 11 removes the sulfur compound contained in the raw fuel 100 by catalysis or adsorption.

The reforming reactor 12 reacts the raw fuel 100 from which the sulfur compound has been removed in the desulfurizer 11 with the steam to generate the hydrogen-rich gas.

It is to be noted that the reforming reactor 12 may be a steam reforming reactor, a partial oxidation reactor, an autothermal reactor or the like. However, it is assumed in the present embodiment that the reforming reactor 12 is a steam type reformer.

Here, the reforming reactor 12 reacts the raw fuel and the steam at an outlet temperature of about 300°C to 850°C to generate a hydrogen-rich reformed gas. Because the reaction in this case is an endothermal reaction, a temperature of a reforming catalytic layer is raised by a reforming combustor 15.

The carbon monoxide (CO) shift reactor 13 reacts carbon monoxide (CO) contained in the reformed gas from the reforming reactor 12 with the steam under the catalyst to reduce carbon monoxide.

It is to be noted that the reformed gas generally contains about 10% of CO. The CO shift reactor 13 reduces CO to about 1% or less. A reaction temperature in this case is about 200°C to 300°C.

The carbon monoxide selective oxidation reactor 14 reacts carbon monoxide remaining in the reformed gas fed from the CO shift reactor 13 with oxygen in the air under the catalyst to reduce carbon monoxide.

That is, CO which can not be removed by the CO shift reactor 13 is reduced to 10 ppm or less. A reaction temperature in this case is about 100°C to 200°C.

### (Power Generation Operation)

First, an operation of the fuel processing system 10 when the system 1 is in operation will be described referring to FIGS. 2 and 3.

As shown in FIG. 2, in operation, the controller 31 controls to bring the passage control sections 32, 33, 36 and 38 into an open state so that the reformed gas is supplied from the fuel processing system 10 to the fuel cell main unit 20. Hereinafter, gas distribution control will mainly be specifically described referring to FIG. 3.

As shown in FIG. 3, the controller 31 opens the electrically operated valve V38 to supply the air from the air supplier 4 to the CO selective oxidation reactor 14 via a pipe P9. At this point, the controller 31 closes the electrically operated valve V37 to block the distribution of the air.

Furthermore, the controller 31 opens the electrically operated valve V39 to supply the steam from a steam generator 3 to the reforming reactor 12 via a pipe P2.

Moreover, the controller 31 controls to open the electrically operated valves V32, V33 and V36. In this way, the raw fuel 100 from the raw fuel supplier 2 is supplied to the reforming reactor 12 via a pipe P1 after the sulfur compound is removed therefrom by the desulfurizer 11.

The reforming reactor 12 reacts the raw fuel 100 from which the sulfur compound has been removed in the desulfurizer 11 with the steam from the steam supplier 3 to generate a hydrogen-rich reformed gas. The reaction in this case is an endothermal reaction.

Here, as shown in FIG. 2, the used reformed gas discharged from the fuel cell main unit 20 is used as a fuel in the reforming combustor 15.

The reformed gas from the reforming reactor 12 is supplied to the CO shift reactor 13 via a pipe P5 as shown in FIG. 3. In the CO shift reactor 13, a shift reaction is performed in which hydrogen and carbon dioxide (CO2) are shifted by carbon monoxide (CO) and the steam contained in the reformed gas. Then, the reformed gas is supplied from the CO shift reactor 13 to the CO selective oxidation reactor 14 via a pipe P6.

In the CO selective oxidation reactor 14, carbon monoxide remaining in the reformed gas is oxidized by the air supplied from the air supplier 4 via the pipe P9 to be carbon dioxide. Thus, the reformed gas in which CO is further reduced is additionally supplied to the fuel cell main unit 20 as a fuel gas for the anode electrode.

In this way, the hydrogen-rich reformed gas is supplied to the anode electrode of the fuel cell main unit 20 as the fuel gas. On the other hand, the air is supplied to the cathode electrode from the cathode air supplier 5, as described above.

In the fuel cell main unit 20, the hydrogen gas is ionized by catalysis in the anode electrode and thus separates into protons and electrons. The protons are conducted to the cathode electrode via a solid polymeric electrolytic film. The electrons are conducted to the cathode electrode via an external circuit. In this cathode electrode, a water generating reaction is caused by the protons, the electrons and oxygen.

On the other hand, owing to flow of the electrons (current) via the external circuit, it is possible to extract DC power. That is, power generation in the fuel cell main unit 20 is achieved.

### (Purge Treatment)

Next, when the operation of the power generation system 1 is stopped, the fuel processing system 10 performs a purge treatment to purge (discharge) the residual gases as the supply of the raw fuel 100 from the raw fuel supplier 2 is stopped.

The fuel processing system 10 in the present embodiment causes the steam as the purge gag to flow in the forward direction (the same direction as that of the reformed gas) by the gas distribution control of the controller 31, and then causes the air as the purge gas to flow in an opposite direction. This supply of the air allows the removal of a water material from the steam used to purge the residual gas.

Hereinafter, the gas distribution control during the purge treatment will be described referring to FIG. 3.

Here, the fuel processing system 10 in the present embodiment has an exhaust gas treatment unit 16 which treats the residual gas to be purged (e.g., removal of sulfur oxide), as shown in FIG. 3.

In the purge treatment, the controller 31 first opens the electrically operated valve V39 to introduce steam from the steam generator 3, and causes the steam to flow to the reforming reactor 12 via the pipe P2. At the same time, the controller 31 opens the electrically operated valve V35 to cause the steam to flow from the reforming reactor 12 via the pipes P5, P6, P7 and P10 in the forward direction (a direction indicated by a full line).

It is to be noted that the controller 31 controls the electrically operated valve V32 and V36 into a blocking state since the operation is stopped.

Thus, the steam is caused to flow as the purge gas such that the residual gas is purged to the exhaust gas treatment unit 16 while cooling the reforming reactor 12, the CO shift reactor 13 and the CO selective oxidation reactor 14.

Next, the controller 31 opens the electrically operated valves V37 and V40 to cause the air from the air supplier 4 to flow to the reforming reactor 12 via the pipes P8 and P5 in the opposite direction. That is, the air passes the reforming reactor 12 and flows via a pipe P3 and the electrically operated valve V40 in the opposite direction (a direction indication by a dotted line).

It is to be noted that the air from the air supplier 4 branches at the pipe P5 to flow toward the CO shift reactor 13, the CO selective oxidation reactor 14 and the pipe P10.

Thus, the steam is first caused to flow as the purge gas in the forward direction such that the residual gas can be purged while cooling the reforming reactor 12, the CO shift reactor 13 and the CO selective oxidation reactor 14.

Furthermore, the air is caused to flow as the purge gas in the opposite direction such that the water material from the steam is removed especially in the reforming reactor 12 and the residual gas can be purged. Here, the air is caused to flow in the opposite direction such that it is possible to restrain diffusion of sulfur poisoning in which the sulfur compound adsorbed by the catalyst of the reforming reactor 12 is diffused to the CO shift reactor 13, the CO selective oxidation reactor 14 and the like.

That is, the air is caused to flow as the purge gas in the opposite direction, thereby making it possible to restore activity of the catalyst owing to a reaction between the sulfur compound adsorbed by the catalyst of the reforming reactor 12 and oxygen. Moreover, the sulfur poisoning can be restrained from being diffused in the fuel processing system 10, and it is therefore possible to prolong a life of the device.

### (Effects of the Present Embodiment)

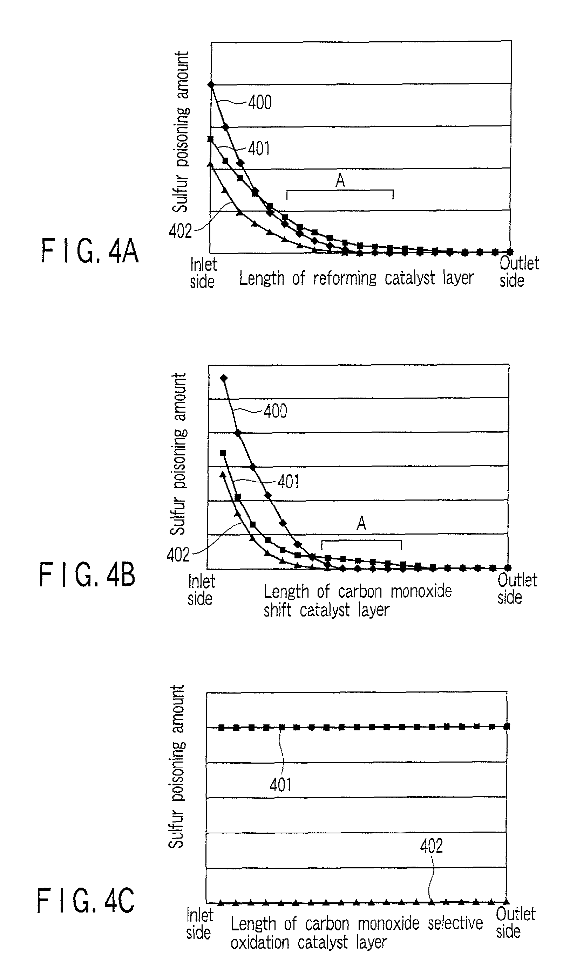

Here, effects of the purge treatment in the present embodiment will be specifically described referring to FIGS. 4(A) to (C).

FIG. 4(A) shows experimental results indicating a sulfur poisoning amount over the catalytic layer in relation to the reforming reactor 12; FIG. 4(B) shows experimental results in relation to the carbon monoxide shift reactor 13; and FIG. 4(C) shows experimental results in relation to the carbon monoxide selective oxidation reactor 14.

In the drawings, curves 400 indicate the sulfur poisoning amount after power generation, and curves 401 indicate the sulfur poisoning amount when the steam and the air are caused to flow in the forward direction. Curves 402 indicate the sulfur poisoning amount when the air is caused to flow as the purge gas in the opposite direction in the purge treatment of the present embodiment. It is to be noted that vertical axes and horizontal axes are based on arbitrary units.

As understood from these drawings, sulfur concentration distribution of the catalytic layer after the power generation relatively indicates a decrease regardless of whether the steam and the air are caused to flow in the forward direction or in the opposite direction. The decrease is notable especially in the vicinity of an inlet side. This means that sulfur adsorbed in the poisoned catalyst is removed and activated (hereinafter, this result is called a "catalyst activation phenomenon").

In addition, as a result of examining activities of the activated catalyst and the poisoned catalyst, it has been confirmed that the catalytic activity is restored both in the catalyst of the reforming reactor 12 and the catalyst of the carbon monoxide shift reactor 13 by the removal of sulfur.

Moreover, the air contributes more to the catalyst activation phenomenon than the steam.

When the steam and the air are caused to flow in the forward direction, there is produced an area where the sulfur concentration distribution indicates a higher amount halfway than that after the power generation, as apparent from A areas in FIGS. 4(A) and (B). This means that the catalyst which has not poisoned in a state after the power generation is poisoned due to the purge in the forward direction (hereinafter, this result is called a "poisoning diffusion phenomenon").

Especially, as seen in FIG. 4(C), few catalysts of the carbon monoxide selective oxidation reactor 14 after the power generation are poisoned, but almost all catalysts (catalysts from the inlet side to an outlet side) are poisoned if the purging is performed in the forward direction, while poisoning of the catalysts is hardly detected if the purge is caused to flow in the opposite direction.

Furthermore, it is understood from all of FIGS. 4(A) to (C) that the sulfur concentration distribution indicates smaller amounts when the steam and the air are caused to flow in the opposite direction than when they are caused to flow in the forward direction (hereinafter, this result is called a "poisoning diffusion restraining phenomenon").

Here, a case will be described where the purge gases which are steam and air are caused to flow in the forward direction.

If the steam and air are caused to flow, sulfur adsorbed in the catalysts of the reforming reactor 12, the carbon monoxide shift reactor 13 and the carbon monoxide selective oxidation reactor 14 will be sulfur dioxide (SO2) due to oxygen contained in the steam and the air, thereby exposing a metal active site (catalyst activation phenomenon).

If sulfur dioxide flows in the forward direction together with the steam and the air at this point, part of sulfur dioxide is adsorbed by a downstream catalyst from which sulfur is removed and by a catalyst which is not originally poisoned, thus causing the poisoning diffusion.

The catalyst activation phenomenon occurs even when the steam and the air are thus caused to flow in the forward direction, but the steam and the air flow from a part where a sulfur concentration is high to a part where it is low in the case of the forward direction. Therefore, the probability increases that the activated catalyst is re-poisoned, so that an amount of the poisoned catalysts is higher than an amount of the activated catalysts in all the reactors such as the reforming reactor 12, the carbon monoxide shift reactor 13 and the carbon monoxide selective oxidation reactor 14. It is thus considered that the poisoning is diffused and effects of the catalyst activation phenomenon are reduced.

Moreover, cooling efficiency is low when the steam and the air are caused to flow in the forward direction as heretofore, for which the following reasons are presumed.

That is, the reaction temperature of the reforming reactor 12 is about 300°C to 850°C. The reaction temperature of the carbon monoxide shift reactor 13 is about 200°C to 300°C. The reaction temperature of the carbon monoxide selective oxidation reactor 14 is about 100°C to 200°C. The reaction temperature of the fuel cell main unit 20 is about 50°C to 100°C. That is, the reaction temperature decreases in accordance with the direction of the fuel cell main unit 20.

Therefore, when the steam and the air are caused to flow in the forward direction, they flow from a high-temperature side to a low-temperature side, so that the cooling efficiency is reduced.

For example, a case is assumed in which the steam cools the reforming reactor 12 and then flows to the carbon monoxide shifter 13. If the temperature of the reforming reactor 12 is 800°C, the steam which has cooled the reforming reactor 12 and reached a high temperature flows into the carbon monoxide shift reactor 13 which is at about 300°C. Thus, there is caused a situation where the carbon monoxide shift reactor 13 can not be sufficiently cooled and the carbon monoxide shift reactor 13 is rather heated, resulting in reduced cooling efficiency.

From the results described above, in the present embodiment, after the steam is caused to flow in the forward direction, the air as the purge gas is caused to flow in the opposite direction, such that it is possible not only to purge the residual gas but also to prevent the poisoning diffusion, restore catalytic power and improve the cooling efficiency.

Especially, in the fuel cell power generation system 1 which performs an operation called a daily start stop operation (DSS operation) wherein starts and stops are repeated a day, there are significant effects in prolonging a life of the system.

Furthermore, since the catalyst can thus be activated, a weakness of a noble metal catalyst which has been regarded as a catalyst extremely susceptible to the sulfur poisoning can be compensated for, and a degree of freedom in selecting the catalyst is increased.

Moreover, it has heretofore been necessary to use the expensive desulfurizer 11 with high desulfurization capability in order to prevent the sulfur poisoning. However, owing to an activation behavior of the catalyst, it is possible to use the inexpensive desulfurizer 11 and reduce costs of the fuel cell power generation system 1.

Still further, owing to the improvement in the cooling efficiency, an amount of the steam or the like required for cooling is reduced, and energy conservation can be achieved.

It is to be noted that the electrically operated valves are assumed as the gas passage control sections in the present embodiment, but they may also be manually operated valves. However, the controller 31 is unnecessary in the case of the manually operated valves.

Furthermore, in the present embodiment, the introduction of the air is started after the introduction of the steam, and this is because it is dangerous if the air is mixed into an inflammable gas. Therefore, the introduction of the air can be started at a point where a risk due to a reaction between the residual gas and the air is reduced. The introduction of the air at such a point makes it possible to reduce an amount of water condensed from the steam, and a treatment of exhaust gases can be completed in a short time.

Moreover, it is considered that the catalyst activation by oxygen more easily occurs at a higher temperature, and the catalyst can be effectively activated if the air is introduced when the flow of the air does not involve risk and when the temperature of the catalyst is not sufficiently low.

Ranges of such temperatures are, by way of example, 200°C to 900°C in the reforming reactor 12, about 100°C to 550°C in the carbon monoxide shift reactor 13 and about 80°C to 250°C in the carbon monoxide selective oxidation reactor 14.

Furthermore, in the present embodiment, the residual gas is released into atmosphere after having been treated by the exhaust gas treatment unit 16 in accordance with the purge treatment. In this case, such a configuration may be provided wherein the residual gas is fed to the exhaust gas treatment unit 16 via the reforming combustor 15.

### (Alternative Embodiment)

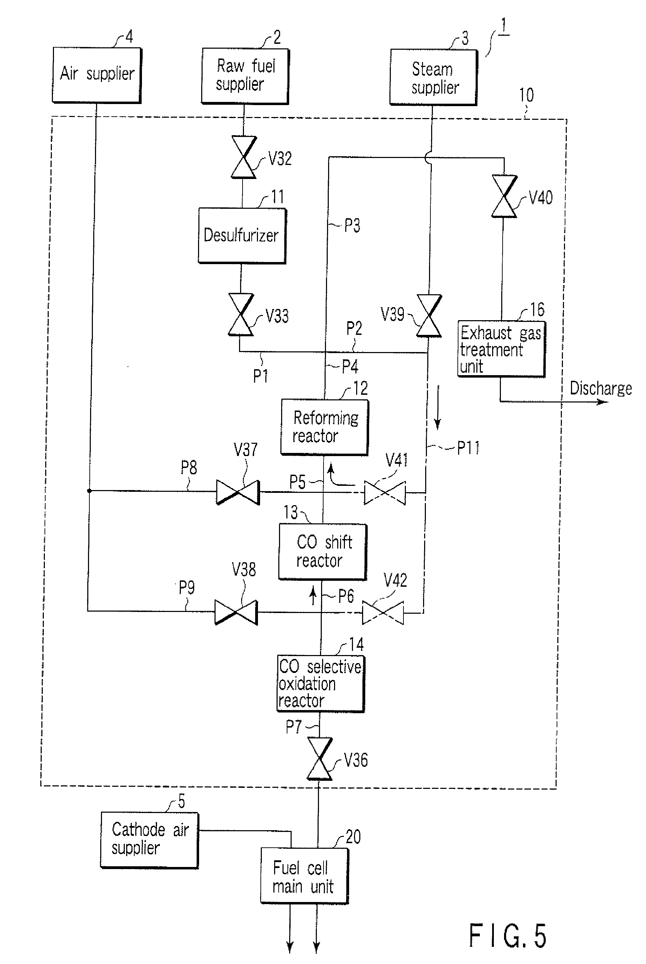

FIG. 5 is a diagram to explain a purge treatment of a fuel processing system 10 according to an alternative embodiment. In the purge treatment of the present embodiment, steam is caused to flow in the opposite direction together with air as the purge gases.

It is to be noted that the same numerals are used for the same components as those in FIG. 3 and explanations thereof are appropriately omitted.

In a configuration of the present embodiment, the electrically operated valve V35 and the pipe P10 in FIG. 3 are omitted, and electrically operated valves V41 and V42 and a pipe P11 are added, as shown in FIG. 5.

In such a configuration, the purge treatment will be described in which the steam and air are caused to flow to purge a residual gas.

First, a controller 31 shown in FIG. 2 opens electrically operated valves V39, V41, V42 and V40 shown in FIG. 5 to introduce steam from a steam generator 3. That is, the controller 31 causes the steam to flow to a reforming reactor 12 via the pipe P11 and the electrically operated valve V41 in an opposite direction (a direction indicated by a full line).

Furthermore, the controller 31 causes the steam to flow to a CO shift reactor 13 via the pipe P11 and the electrically operated valve V42 in the opposite direction (a direction indicated by the full line).

It is to be noted that the controller 31 controls electrically operated valve V32 and V36 into a blocking state since the operation is stopped.

Thus, the steam is caused to flow as the purge gas such that the residual gas is purged to an exhaust gas treatment unit 16 while cooling the reforming reactor 12 and the CO shift reactor 13.

Next, the controller 31 opens the electrically operated valves V37 and V40 to cause the air from an air supplier 4 to flow to the reforming reactor 12 via pipes P8 and P5 in the opposite direction. That is, the air passes the reforming reactor 12 and flows via a pipe P3 and the electrically operated valve V40 in the opposite direction.

Thus, in the configuration of the present embodiment, the steam as the purge gas can be caused to flow in the opposite direction in the same manner as the air. Therefore, as described above, it is possible not only to purge the residual gas but also to prevent poisoning diffusion and activate the catalyst. Consequently, it is possible to prolong the life of the fuel processing system 10, reduce the cost of a desulfurizer 11, improve cooling efficiency, and conserve energy by a decrease in the steam or the like necessary for cooling.

In addition, the case where a combination of steam and air is used as the purge gas has been described in the above embodiment and the alternative embodiment. However, as described above, it is possible to apply, as the purge gas, a combination of steam, air and an inert gas (such as nitrogen gas), a combination of steam and the inert gas, a combination of an inert gas and air, or a combustion exhaust gas.

### Industrial Applicability

According to a fuel processing system of the present invention, fuel is supplied especially to a fuel cell or a fuel cell power generation system, and it is ensured that a residual gas can be purged when an operation is stopped.

## Claims

1. A fuel processing system comprising:
a reactor which introduces a raw fuel, transforms the raw fuel into a hydrogen-rich reformed gas, and supplies the hydrogen-rich reformed gas;
purge gas supply means for supplying a purge gas to purge a residual gas in the reactor; and
distribution control means for distributing the purge gas supplied from the purge gas supply means in a direction opposite to a normal flow direction of the reformed gas in a gas passage including the reactor.

2. The fuel processing system according to claim 1, wherein the purge gas includes at least one kind of steam, air, inert gas or combustion exhaust gas which can be obtained by burning steam the reformed gas or the raw fuel.

3. The fuel processing system according to claim 1, wherein the purge gas supply means supplies a first purge gas containing steam and a second purge gas containing air; and
the distribution control means controls to distribute the first purge gas in the same direction as the normal flow direction of the reformed gas and distribute the second purge gas in a direction opposite thereto.

4. The fuel processing system according to claim 1 or 2, wherein the reactor is configured in such a manner as to connect a plurality of kinds of reactors including a reforming reactor which transforms the raw fuel into the reformed gas; and
the distribution control means controls to supply the purge gas from a connection of the respective reactors to the respective reactors.

5. The fuel processing system according to any one of claims 1 to 4, having an exhaust gas treatment unit which discharges a discharge gas including the residual gas discharged from the gas passage by the distribution control means, the exhaust gas treatment unit purifying the discharge gas and then discharging the discharge gas.

6. The fuel processing system according to any one of claims 1 to 5 applied to a fuel cell, which generates electricity using the reformed gas as a fuel.

7. The fuel processing system according to any one of claims 1 to 6, wherein the distribution control means are provided at a plurality of places in the gas passage and include valves which control blocking or passing of the gas.

8. An operation method of a fuel processing system having a reactor which introduces a raw fuel, transforms the raw fuel into a hydrogen-rich reformed gas, and supplies the hydrogen-rich reformed gas, and purge gas supply means for supplying a purge gas to purge a residual gas in the reactor, the method comprising:
introducing the purge gas into a gas passage including the reactor when supply of the raw fuel is stopped; and
executing distribution control to distribute the purge gas in a direction opposite to a normal flow direction of the reformed gas.

9. The operation method of the fuel processing system according to claim 8, wherein
the purge gas includes a first purge gas containing steam and a second purge gas containing air;
the first and second purge gases are introduced into the gas passage when the supply of the raw fuel is stopped;
the first purge gas is distributed in the same direction as the normal flow direction of the reformed gas; and
distribution control is executed to distribute the second purge gas in the opposite direction.

10. The operation method of the fuel processing system according to claim 8 or 9, wherein the fuel processing system includes an exhaust gas treatment unit which treats a discharge gas including the residual gas discharged from the gas passage and discharges the discharge gas to the outside; and
the discharge gas is discharged after purified in the exhaust gas treatment unit when the discharge gas is discharged to the outside.
